# EUROPEAN PATENT SPECIFICATION

(11) **EP 0 481 402 B1**
(45) Date of publication and mention of the grant of the patent: **12.03.1997**
(21) Application number: 91117491.0
(22) Date of filing: 14.10.1991
(51) Int. Cl.: C08G 73/22, C08G 73/18, C08G 75/32

(54) **Staged polymerization of polybenzazole polymers**
Mehrstufige Polymerisation von Polybenzazolpolymeren
Polymérisation en plusieurs étapes de polymères de polybenzazole

(30) Priority: 19.10.1990 US 600551; 01.03.1991 US 663332
(43) Date of publication of application: 22.04.1992
(73) Proprietor: THE DOW CHEMICAL COMPANY, Midland, Michigan 48640 (US)
(72) Inventor: Gregory, Thomas, Midland, Michigan 48642 (US); Hurtig, Carl W., W-2160 Stade (DE); Ledbetter, Harvey D., Pinehurst, North Carolina 28374 (US); Quackenbush, Kenneth J., Saginaw, Michigan 48602 (US); Rosenberg, Steven, Midland, Michigan 48640 (US); So, Ying Hung, Midland, Michigan 48640 (US)
(74) Representative: Sternagel, Hans-Günther, Dr.

(56) References cited:
- US-A- 4 225 700
- US-A- 4 772 678

## Description

This invention relates to the art of polybenzazole (PBZ) polymers and processes for synthesizing them.

Polybenzazole polymers are a known class of polymers comprising polybenzoxazole (PBO), polybenzothiazole (PBT), polybenzimidazole (PBI) and copolymers of these polymers. Polybenzazoles are generally classified as AB-polymers, containing a plurality of mer units depicted in formula 1(a), or AA/BB, containing a plurality of mer units which conform with formula 1(b) 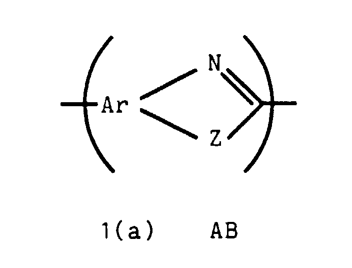 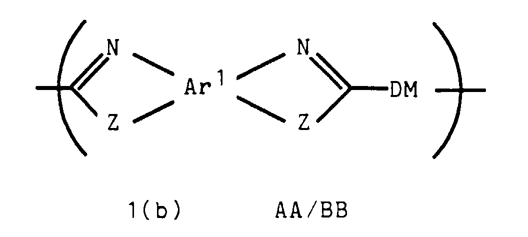 wherein:
each Ar is an aromatic group,
DM is a divalent organic moiety which is stable and inert under polymerization conditions, and
each Z is independently an oxygen atom, a sulfur atom, or a nitrogen atom that is bonded to a hydrogen atom or an organic moiety which is stable and inert in acid under polymerization conditions.

(For the purpose of this application, when the nitrogen atoms and Z moieties of a mer unit are depicted as bonded to an aromatic group without indicating their position, as in Formulae 1(a)-(b), it shall be understood that:
(1) each nitrogen atom and Z group within a given azole ring are bonded to the aromatic group in ortho position with respect to each other; and
(2) if the mer unit has two azole rings, one nitrogen atom and Z moiety may be in either *cis* position or *trans* position with respect to the other nitrogen atom and Z moiety, for example illustrated in 11 Ency. Poly. Sci. & Eng., Polybenzothiazoles and Polybenzoxazoles, at 602 (J. Wiley & Sons 1988). The same understandings apply with respect to amine groups and Z moieties in a BB-PBZ monomer.)

AA/BB-Polybenzazoles are synthesized by the reaction of at least one AA-PBZ monomer containing two electron-deficient carbon groups with at least one BB--PBZ monomer containing two o-amino-basic moieties. The reaction is illustrated generally in Formula 2: 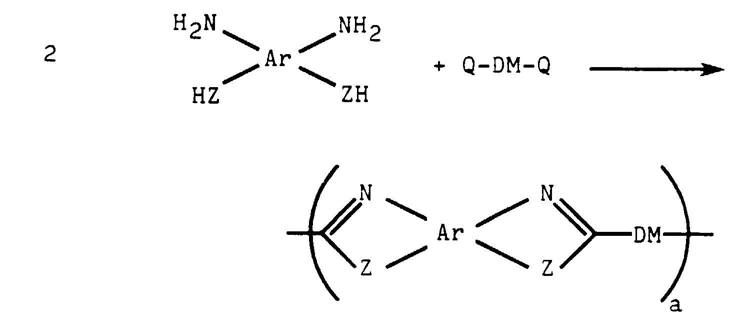 wherein each Q is an electron-deficient carbon group and all other moieties have the meaning and preferred embodiments previously given. The divalent organic moiety DM of the AA-monomer ordinarily comprises an aromatic group, which is most usually a p-phenylene group. The reaction is ordinarily carried out under non-oxidizing conditions in a non-oxidizing, dehydrating solvent acid, which is most frequently polyphosphoric acid.

Free base BB-PBZ monomers are susceptible to air oxidation. The monomers are typically handled and stored as hydrogen halide salts, because the salt is more stable with respect to oxidation.

The volatile hydrogen halide protecting acid is displaced by the solvent acid when the monomer is placed in solution. Afterwards, the volatile acid can interfere with the polymerization. Therefore, the volatile protective acid is ordinarily removed from the reaction solution in a devolatilization step before commencing polymerization. Devolatilization is frequently carried out at moderate temperatures (45°C to 100°C) in a polyphosphoric acid solution having a relatively low P₂O₅ content (76 to 80 weight percent). The polymerization is carried out after devolatilization, at higher temperatures (150 to 220) in a solution having a higher P₂O₅ content (80 to 90 weight percent), which is achieved by adding P₂O₅ to the reaction mixture after the devolatilization step.

Polybenzazole polymers, their properties and their synthesis are discussed in detail in the following references: Sybert et al., Liquid Crystalline Polymer Compositions, Process and Products, U.S. Patent 4,772,678 (September 20, 1988); Wolfe et al., Liquid Crystalline Polymer Compositions, Process and Products, U.S. Patent 4,703,103 (October 27, 1987); Wolfe et al., Liquid Crystalline Polymer Compositions, Process and Products, U.S. Patent 4,533,692 (August 6, 1985); Wolfe et al., Liquid Crystalline Poly(2,6-Benzothiazole) Compositions, Process and Products, U.S. Patent 4,533,724 (August 6, 1985); Wolfe, Liquid Crystalline Polymer Compositions, Process and Products, U.S. Patent 4,533,693 (August 6, 1985); Imai et al. "Polybenzoxazoles and Polybenzothiazoles," 83 Makromol. Chem. 167 (1965), Evers, Thermooxadatively Stable Articulated p-Benzobisoxazole and p-Benzobisthiazole Polymers, U.S. Patent 4,359,567 (November 16, 1982); Tsai et al., Method for Making Heterocyclic Block Copolymer, U.S. Patent 4,578,432 (March 25, 1986) and 11 Ency. Poly. Sci. & Eng., Polybenzothiazoles and Polybenzoxazoles, 601 (J. Wiley & Sons 1988).

The dopes resulting from polymerization are typically spun and drawn to form fibers by a dry-jet, wet spin process. Effective fiber spinning demands that the dope have very uniform and consistent properties, such as viscosity, both within each polymerization run and from one run to the other. The polymerization of polybenzazole contains many variables that can cause small changes in polymer and/or dope properties which are sufficient to affect the fiber quality. A method is needed to obtain a dope having consistent and reproducible properties. Other improvements that are needed include a method to store devolatilized polybenzazole reaction mixtures until the polymer is formed and a method suitable to rapidly polymerize polybenzazole in large quantities.

The present invention is a process wherein a selected amount of AA-PBZ monomer reacts with a selected amount of BB-PBZ monomer in a dehydrating solvent acid to synthesize an AA/BB-polybenzazole polymer, characterized in that the process comprises the steps of:
(1) reacting the monomers to form a reaction mixture containing polybenzazole oligomer;
(2) contacting a portion of the reaction mixture resulting from step (1) with a selected amount of chain extender and/or chain terminator in a continuous reactor with a residence time of no more than one hour under conditions such that a dope containing higher molecular weight polybenzazole polymers is formed;
(3) measuring a property of the dope and/or polymer resulting from step (2); and
(4) adjusting the selected amount of chain extender and/or chain terminator added to the remaining portions of the reaction mixture in step (2) to obtain a dope and/or polymer in which the measured property meets a selected value.

Preferably the property measured in step (3) in any of :
(a) dope viscosity; or
(b) polymer molecular weight.

In a preferred embodiment
(1) a mixture containing AA-PBZ monomer and BB-PBZ monomer are reacted, at a temperature of at least 60°C with agitation in a batch reactor to form a reaction mixture containing polybenzazole oligomers; and
(2) the reaction mixture of step (1) is passed through a single-screw or multiple screw extruder at a temperature of at least 150°C under conditions such that a dope containing a polybenzazole polymer is formed.

The staged reactions of the present invention are useful for the large-scale synthesis of polybenzazole polymers. The oligomer solutions of each process are stable. They may be stored for several days and still be reacted to a high molecular weight. Properties such as the molecular weight of the polymer or the bulk viscosity of the dope may be tailored to a desired level easily and reproducibly by the process of the first aspect.

### Definitions

The following terms are used repeatedly throughout this application. and have the meaning and preferred embodiments defined herein unless otherwise specified.

AA-PBZ Monomer - A monomer suitable for synthesizing poiybenzazole polymers, comprising two electron-deficient carbon groups linked by a divalent organic moiety (DM) which is stable so that it does not interfere with the synthesis, fabrication and use of the polybenzazole polymer. The electron-deficient carbon groups have the definition and preferred embodiments given herein. The divalent organic moiety is preferably alkyl or an aromatic group, as herein defined, is more preferably an aromatic group, and is most preferably a six-membered aromatic group. Examples of suitable AA-PBZ monomers and references to their synthesis are provided in U.S. Patent 4,533,693 at Col. 25-32, Tables 4-6. Preferred examples of AA-PBZ monomers include (a) terephthalic acid, (b) terephthaloyl halide,(c) dialkyl terephthalate ester, (d) bis(4-benzoic acid), (e) bis(4-benzoyl halide), or (f) bis(4-alkylbenzoate).

AB-PBZ Monomer - A monomer suitable for synthesizing polybenzazole polymers, comprising an aromatic group, an o-amino-basic moiety bonded to the aromatic group, and an electron-deficient carbon group linked to the aromatic group. The aromatic group, the electron-deficient carbon group and the o-amino-basic moiety have the definitions and preferred embodiments given herein. Examples of suitable AB-monomers and processes for their synthesis are provided in U.S. Patent 4,533,693 at Col. 33-35, Tables 7-8. Preferred examples of AB-monomers include 3-amino-4-hydroxybenzoic acid, 3-hydroxy-4-aminobenzoic acid and the acid halides thereof. AB-monomers are frequently stored as salts of hydrogen chloride or phosphoric acid, because the free--base of the monomer is susceptible to air oxidation.

o-Amino-basic moiety - a moiety, which is bonded to an aromatic group, consisting of
(1) a primary amine group bonded to the aromatic group and
(2) a hydroxy, thiol or primary or secondary amine group bonded to the aromatic group ortho to said primary amine group.
It preferably comprises a hydroxy, thiol or primary amine moiety, more preferably comprises a hydroxy or thiol moiety, and most preferably comprises a hydroxy moiety. Secondary amine groups comprise an aromatic or an aliphatic group and preferably an alkyl group. The secondary amine group preferably comprises no more than about 6 carbon atoms, more preferably no more than about 4 carbon atoms and most preferably no more than about 1 carbon atom.

Aromatic group (Ar) - any aromatic ring or ring system. Size is not critical as long as the aromatic group is not so big that it prevents further reactions of the moiety in which it is incorporated. Each aromatic group independently preferably comprises no more than about 18 carbon atoms, more preferably no more than about 12 carbon atoms and most preferably no more than about 6 carbon atoms. Each may be heterocyclic but is preferably carbocyclic and more preferably hydrocarbyl. If the aromatic group is heterocyclic, the heteroatom is preferably nitrogen.

Unless otherwise specified, each aromatic group may comprise a single aromatic ring, a fused ring system or an unfused ring system containing two or more aromatic moieties joined by bonds or by divalent moieties (DL) which are inert with respect to PBZ polymerizing reagents under polymerization conditions. Suitable divalent moieties comprise, for example, a carbonyl group, a sulfonyl group, an oxygen atom, a sulfur atom, an alkyl group and/or and or a perfluorinated alkyl group. Each aromatic group is preferably a single six-membered ring.

Each aromatic group may contain substituents which are stable in solvent acid and do not interfere with further reactions of the moiety which the aromatic group is part of. Examples of preferred substituents include halogens, alkoxy moieties, aryloxy moieties or alkyl groups. More preferred substituents are either an alkyl group having no more than about 6 carbon atoms or a halogen. Most preferably, each aromatic group contains only those substituents specifically called for hereinafter.

Azole ring - an oxazole, thiazole or imidazole ring. The carbon atom bonded to both the nitrogen atom and the oxygen, sulfur or second nitrogen atom is the 2-carbon, as depicted in Formula 3 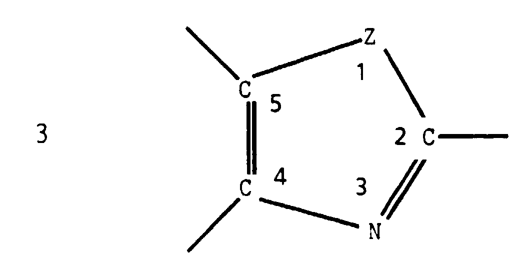 wherein Z is -O-, -S- or -NR-; and R is hydrogen, an aromatic group or an aliphatic group, preferably hydrogen or an alkyl group, and most preferably hydrogen. R preferably comprises no more than about 6 carbon atoms, more preferably no more than about 4 and most preferably no more than about 1. Each azole ring is independently preferably oxazole or thiazole and more preferably oxazole. In PBZ polymers, the 4- and 5-carbon of each azole ring is ordinarily fused with an aromatic group.

Azole-forming moiety - an "o-amino-basic moiety" or "electron-deficient carbon group," as those terms are defined herein.

BB-PBZ Monomer - A monomer suitable for synthesizing polybenzazole polymers, comprising an aromatic group and two o-amino-basic moieties which are bonded to the aromatic group. The aromatic group and the o-amino-basic moieties have the definitions and preferred embodiments given herein. Examples of suitable BB-PBZ monomers and processes for synthesis are provided in U.S. Patent 4,533,693 at Col. 19-24, Tables 1-3. Examples of preferred BB-PBZ monomers include 4,6-diaminoresorcinol, 2,5-diaminohydroquinone and 1,4-dithio-2,5-diaminobenzene or salts thereof. BB-PBZ monomers are frequently stored as salts of hydrogen chloride or phosphoric acid, because the free base of the monomer is susceptible to air oxidation.

Electron-deficient carbon group (Q) - any group containing a carbon atom which can react in the solvent acid with an o-amino-basic moiety to form an azole ring, such as the groups listed in Col. 24, lines 59-66 of the 4,533,693 patent. Preferred electron-deficient carbon groups are carboxylic acids, acid halides, metal carboxylate salts, cyano groups and trihalomethyl groups. Halogens in electron-deficient carbon groups are preferably chlorine, bromine or iodine and more preferably chlorine.

Polybenzazole (PBZ) polymer - A polymer from the group of polybenzoxazoles and polybenzobisoxazoles (PBO), polybenzothiazoles and polybenzobisthiazoles (PBT) and polybenzimidazoles or polybenzobisimidazoles (PBI). For the purposes of this application, the term "polybenzoxazole (PBO)" refers broadly to polymers in which each mer unit contains an oxazole ring bonded to an aromatic group, which need not necessarily be a benzene ring. The term "polybenzoxazole (PBO)" also refers broadly to poly(phenylene-benzo-bis-oxazole)s and other polymers wherein each mer unit comprises a plurality of oxazole rings fused to an aromatic group. The same understandings shall apply to the terms polybenzothiazole (PBT) and polybenzimidazole (PBI).

Rigid Rod PBZ polymer - An "intrinsic" or "articulated" rigid rod PBZ polymer as the terms "intrinsic" and "articulated" are defined in the Hwang, "Processing, Structure and Properties of Liquid Crystalline PBT Polymer", Kansai Committee of the Society of Fiber Science and Technology, Japan, Post Symposium on Formation, Structure and Properties of High Modulus and High Tenacity Fibers 23-26 (August 26, 1985); Evers et al., "Articulated All-Para Polymers with 2,6-Benzobisoxazole, 2,6-Benzobisthiazole, and 2,6-Benzobisimidazole Units in the Backbone," 14 Macromolecules 925 (1981); Evers, "Thermooxadatively Stable Articulated Benzobisoxazole and Benzobisthiazole Polymers," 24 J. Poly. Sci. Part A 1863 (1986) and Evers et al., Articulated Para-Ordered Aromatic Heterocyclic Polymers Containing Diphenoxybenzene Structures, U.S. Patent 4,229,566 (October 21, 1980).

Intrinsic rigid rod polymers are essentially rectilinear and consist essentially of mer units having an angle of catenation of at least about 150°. Articulated rigid rod polymers comprise a plurality of essentially rectilinear moieties joined by a relatively small number of non-linear moieties. Rigid rod PBZ polymers used in the present invention are preferably intrinsic rigid rod polymers. If articulated, they preferably comprise on average no more than about 1 non--linear mer unit for each 9 essentially rectilinear mer units.

Solvent acid - any non-oxidizing liquid acid capable of dissolving PBZ polymers, such as sulfuric acid, methanesulfonic acid, trifluoromethylsulfonic acid, polyphosphoric acid and mixtures thereof. It must be sufficiently non-oxidizing that it does not substantially oxidize AB- and BB-PBZ monomers which are dissolved therein. Solvent acids are preferably dehydrating acids, such as polyphosphoric acid or a mixture of methanesulfonic acid and phosphorus pentoxide. Preferred concentrations of P₂O₅ in the methanesulfonic acid are described in U.S. Patents 4,847,350 and 4,722,678. Concentrations of P₂O₅ in the polyphosphoric acids are described in U.S. Patents 4,533,693 and 4,722,678.

AA- and BB-PBZ monomers are polymerized in the present invention. The reaction mixture may also contain a minor amount of AB-monomer, but preferably it does not. The monomers are more preferably chosen to provide a rigid rod polybenzoxazole or polybenzothiazole, and are most preferably chosen to provide rigid rod cis-polybenzoxazole. The monomers are defined and further described in the definitions. The BB-PBZ monomers are preferably added as the salt of a stabilizing acid, such as hydrogen chloride or phosphoric acid.

The monomers polymerize by a condensation process. It is convenient to think of the reaction as occurring in four stages. In the first (mixing) stage, at least the BB-PBZ monomers are mixed with a solvent. In the second (devolatilization) stage, volatile protecting acids are drawn off from the reaction mixture, if necessary. In the third (oligomerization) stage, the AA- and BB-PBZ monomers react to form oligomers. In the fourth (advancement) stage, the oligomers react to form high molecular weight polymer. The present invention relates primarily to the oligomerization and advancement stages of the reaction.

There is no sharp dividing line for these stages. Devolatilization may commence as the monomers are mixed with the solvent. The devolatilization and oligomerization stages may be carried out simultaneously in the same piece of equipment. There is not a generally recognized point at which a polymer is at too high a molecular weight for the oligomerization stage or too low a molecular weight for the advancement stage. Depending upon the equipment used, the oligomerization should preferably be discontinued when the polymer reaches a molecular weight sufficiently high for it to be stored in solution without degradation and sufficiently low for the solution to be pumpable.

Certain reaction conditions are equally applicable in all stages. The reaction should take place in a solvent acid under dehydrating conditions. The conditions should be non-oxidizing, such as nitrogen or noble gas atmosphere or vacuum. The pressure may be atmospheric, subatmospheric or superatmospheric, but should permit the removal of volatile compounds that interfere with polymerization.

In the first stage of the process, a selected amount of BB-PBZ monomer is mixed with a reaction solvent, which is preferably a solvent acid. The amount of BB-PBZ monomer is preferably sufficient to provide a liquid crystalline solution when the polymerization is complete. The concentration of BB-PBZ monomer is preferably sufficient to provide a finished dope containing at least 7 percent polymer, more preferably at least 12 percent polymer and most preferably at least 15 percent polymer, by weight. The maximum concentration of monomer is typically limited by practical considerations such as solubility and viscosity. Ordinarily the concentration of monomers is no more than would be necessary to provide a solution containing 30 percent polymer, more typically no more than 21 percent polymer, and most often no more than 18 percent polymer.

AA-PBZ monomers may be added simultaneously with the BB-PBZ monomers, or the monomers may be added in any order sequentially. Preferably, AA-PBZ monomers are added about simultaneously with the BB-PBZ monomers. More preferably, the ratio of AA-PBZ monomers to BB-PBZ monomers added is that described hereinafter for the oligomerization step.

The solvent is preferably a solvent acid, as previously defined. and is most preferably a polyphosphoric acid. The solvent may be a low P₂O₅ polyphosphoric acid (such as about 77 weight percent P₂O₅) or a commercial polyphosphoric acid (such as about 83 percent P₂O₅) at the time that mixing is commenced, but it preferably contains higher levels of P₂O₅ at the commencement of the oligomerization step, as described hereinafter. This is preferably accomplished by adding extra P₂O₅ to the solvent acid during the mixing step. The extra P₂O₅ is more preferably added to the solvent and mixed in at about the same time that the monomers are added and mixed in.

The temperature of mixing is preferably at least 25°C, more preferably at least 45°C and most preferably at least 55°C. It is preferably low enough that the monomer does not substantially degrade. It is preferably no more than 150°C, more preferably no more than 100°C and most preferably no more than 70°C. The monomer and P₂O₅ added are preferably micronized. Certain monomers, such as terephthalic acid, may be substantially insoluble in the solvent acid. Mixing need not be carried out to dissolve all monomers, but it is preferably carried out for a time sufficient to at least wet all monomer. Then the second stage of the reaction is preferably commenced immediately.

The second (devolatilization) stage may be unnecessary with proper choice of monomers. Certain monomers, such as BB-PBZ monomer phosphate salts and terephthalic acids, do not release volatile compounds and do not require devolatilization. Reactions carried out without devolatilization are described in Harris et al., U.S. Patent Application Ser. No. 341,502. If the monomers do release volatile components, such as hydrogen chloride from BB-PBZ monomer hydrohalide salts and terephthaloyl halides, then the reaction mixture should be devolatilized.

The temperature of the devolatilization stage is preferably high enough to drive out volatile protecting acids in a rapid fashion, and low enough to avoid substantial decomposition of the unpolymerized monomers. The temperature is preferably no more than 190°C, more preferably no more than 150°C, and most preferably no more than 130°C. It is preferably at least 40°C, more preferably at least 60°C, and most preferably at least 100°C.

The devolatilization is preferably carried out with vigorous mixing. Examples of suitable mixing equipment includes all of the equipment listed in U.S. Patent 4,772,678 in Col. 44-45. Preferred examples include single or multiple screw extruders, piston--agitated reactors, Sigma blade mixers, helical mixers (such as dual helical ribbon mixer) and multiple impeller mixers.

When the solvent is polyphosphoric acid, the polyphosphoric acid may contain as little as 76 percent P₂O₅ or less at the beginning of the devolatilization step, but it preferably contains at least 80 weight percent P₂O₅, more preferably at least 85 weight percent, and most preferably at least 88 weight percent. The concentration of P₂O₅ in the polyphosphoric acid must be low enough to allow adequate mixing. It is preferably no more than 94 weight percent and more preferably no more than 92 weight percent.

Under preferred conditions, devolatilization of 4.54 kg (10 lbs.) or more of diaminoresorcinol bis(hydrogen chloride) salt can be essentially completed in a few hours. The rapid evolution of volatiles in viscous reaction mixtures may cause foaming, as previously described in the literature.

Foaming may be minimized by several techniques. For instance, the devolatilization reactor may have a high surface-to-volume ratio as described in U.S. Patent 4,772,678. The BB-monomer salt may have a large particle size, such as at least about 40 mesh or greater. The larger particle is dissolved more slowly into the polyphosphoric acid, thus spreading out the evolution of the volatile acid. The monomers may be chosen to minimize the level of volatile components in the system, such as polymerizing terephthalic acid (rather than terephthaloyl chloride) with the BB-PBZ monomer bis(hydrogen chloride) salt. The pressure of the devolatilization reactor may be controlled to minimize foaming. The mixing apparatus may be chosen to help break foam. The devolatilization reactor should have a reasonable amount of head space to permit some level of foaming.

If the reaction mixture contains both AA-monomers and BB-PBZ monomers during mixing and/or devolatilization, then the oligomers ordinarily begin forming during the devolatilization stage. Otherwise, the AA-PBZ monomer is preferably added and oligomerization is preferably commenced almost immediately after devolatilization is completed. We have learned that the devolatilized BB-PBZ monomer is susceptible to thermal degradation at moderate temperatures, such as 150°C to 190°C. Functionally terminated oligomers are more stable, and their stability increases with increasing degree of polymerization. Therefore, the devolatilized reaction mixture is preferably stored after the oligomerization stage, rather than before it. The oligomerization stage is preferably commenced as quickly as possible.

The reaction mixture preferably contains an excess of BB-PBZ monomers. The unbalanced stoichiometry ensures that the oligomerization stage stops at a relatively reproducible point. It also ensures that the reaction does not continue to build a high molecular weight polymer while the dope is stored (otherwise the dope might be too viscous to pump out of the storage tank after storage). Ordinarily, excesses of BB-PBZ monomer are effective to hold down the molecular weight of rigid polybenzazole polymer. It has been reported in the literature that excess AA-PBZ monomer has little or no effect on the molecular weight of rigid rod polybenzazole polymers. It is theorized, without intending to be bound, that the insolubility of many common AA-PBZ monomers in solvent acids is responsible for that behavior.

The reaction mixture preferably contains no more than 0.99 moles of AA-PBZ monomer per mole of BB-PBZ monomer during the oligomerization step. It more preferably contains no more than 0.98 moles of AA-PBZ monomer per mole of BB-PBZ monomer. The reaction mixture preferably contains at least 0.75 mole of AA-monomer per mole of BB-monomer, more preferably at least 0.85 mole, and most preferably at least 0.90 mole.

The oligomerization step is carried out under known conditions. The solvent acid should be dehydrating, as described in U.S. Patents 4,533,693 and 4,847,350. The solvent acid is preferably a high P₂O₅ polyphosphoric acid as previously described. The temperature is preferably at least 60°C, more preferably at least 100°C and most preferably at least 120°C. It is preferably no more than 190°C, more preferably no more than 170°C, and most preferably no more than 150°C. The oligomerization is preferably carried out with vigorous agitation as previously described.

The oligomerization is preferably carried out until the polybenzazole reaches an average molecular weight at which the polybenzazole is substantially stable and the reaction mixture is pumpable. "Substantially stable" means that the reaction mixture can be stored for at least 24 hours at pumpable temperatures and still be advanced to high molecular weight. The dope is preferably storable for at least 48 hours and more preferably for at least one week. The temperature for storage is preferably at least 100°C and more preferably at least 120°C. It is preferably no more than 190°C and more preferably no more than 170°C.

The average number of repeating units in the oligomer at the end of the oligomerization stage is preferably at least 5, more preferably at least 10 and most preferably at least 15. It is preferably at most 75, more preferably at most 50, and most preferably at most 40. The degree of polymerization may conveniently be tracked by measuring the viscosity of the reaction mixture, for instance by measuring the level of power needed for agitation. Such measurements are necessarily dependent upon the equipments used and the specific contents of the reaction mixture. They can easily be optimized by persons of ordinary skill in the art.

In one preferred embodiment, the mixing, devolatilization and oligomerization stages are carried out in a batch reactor. The solvent acid, AA- and BB-PBZ monomers and extra P₂O₅ (if any) are added simultaneously to the reactor with agitation at a temperature suitable for mixing. As mixing is accomplished, the temperature and agitation are adjusted for devolatilization and oligomerization.

Following the oligomerization stage, the dope may be stored as previously described or may be pumped directly over to the advancement stage. Storage is preferably at a temperature at which the reaction mixture remains pumpable, as previously described. The storage should be under non-oxidizing conditions. and preferably under essentially no shear. It is more preferably in a separate storage tank to free up the reaction vessels for mixing, devolatilization and oligomerization of a new batch.

The advancement stage is preferably carried out under high temperature and high shear. The temperature is preferably at least 175°C and more preferably at least 190°C. It is preferably at most 300°C, more preferably at most 230°C and most preferably no more than 220°C. The shear is preferably at least 10 s⁻¹, more preferably at least 300 s⁻¹, and most preferably at least 500 s⁻¹.

The advancement stage is preferably carried out under reduced pressure. The pressure is preferably no more than about 2 10⁴ Pa (150 mmHg). The minimum pressure is dictated primarily by practical concerns. It is conveniently at least about 1.3·10² Pa (1 mmHg).

The solvent in the advancement stage should be dehydrating. For instance, polyphosphoric acid preferably contains at least 78 weight percent P₂O₅, more preferably at least 80 weight percent and most preferably at least 83 weight percent, at the beginning of the advancement stage.

In the advancement stage, the monomer level in the reaction mixture should be adjusted to provide a polymer having the desired molecular weight. For instance. a selected quantity of AA-PBZ monomer may be added to the reaction mixture as a chain extender to bring the total AA-PBZ monomer to at least about equimolar proportions. This is particularly desirable if an excess of BB-PBZ monomer was used in the oligomerization step. The extra AA-PBZ monomer is preferably at least 1 mole percent of the BB-PBZ monomer used in the oligomerization step, more preferably at least 2 mole percent. It is preferably no more than 25 mole percent, more preferably no more than 10 mole percent and most preferably no more than 4 mole percent. it preferably does not make the total molar quantity of AA-PBZ monomer in the reaction greater than the total molar quantity of BB-PBZ monomer in the reaction.

A chain terminator may be added if it is desirable to hold the molecular weight down during advancement. Examples of suitable chain terminators are described in Wolfe, U.S. Patent 4,772,678 at Col. 22-27 (September 20, 1988). Suitable chain terminators are typically monofunctional (a) o-aminophenol, (b) an o-aminobenzenethiol,(c) an o-diaminobenzene, (d) a benzoic acid,(e) a benzoyl halide, or (f) an alkyl benzoate ester. Examples of suitable monofunctional carboxylic acid type terminators include benzoic acid, phenylbenzoic acid, cyclohexane carboxylic acid, picolinic acid, naphthoic acid, acetic acid, propionic acid, and acid halide, ester or nitrile derivatives thereof. Examples of other suitable terminators include o-aminophenol, phenyl-2-aminophenol, o-aminonaphthol and variations wherein the hydroxy group is replaced with a thio or amino group. The total amount of chain terminator added is preferably equal to no more than 5 mole percent of the monomers used in the reaction, more preferably no more than 2 mole percent and most preferably no more than 1 mole percent.

Preferably, the stoichiometry of the reaction is adjusted such that the number of reactive sites provided by AA-PBZ monomers is essentially equal to the number of sites provided by the BB-PBZ monomer and aminophenolic terminator.

The advancement step is carried out in a reactor that reacts relatively small quantities of the reaction mixture in a continuous fashion for a relatively short residence time under conditions that will cause the reaction to complete in that time frame. Examples of suitable reactors include single and multiple screw extruders. The properties of the dope or polymer, such as dope viscosity or polymer molecular weight, can be measured for material leaving the reactor. Then the level of AA-PBZ monomer and/or chain terminator added before or during advancement step can be adjusted until the properties of the polymer and/or dope leaving the reactor meet a selected value.

Under preferred conditions, the residence time is preferably no more than one hour, more preferably no more than 20 minutes and most preferably no more than 10 minutes. If the reaction is not completed to the desired level of advancement, the reaction mixture may even be recirculated through the advancement reactor with more AA-PBZ monomer. The reaction is preferably completed in one pass.

In a preferred embodiment, the oligomerization stage is carried out in a batch reactor, and the advancement stage is carried out in an extruder. More preferably, the mixing, devolatilization and oligomerization stages are all carried out in a single batch reactor.

The processes of the present invention may be used to make low molecular weight polybenzazoles, such as those having an average degree of polymerization between 6 and 20. The polymers preferably have a degree of polymerization of at least 20, more preferably at least 30 and most preferably at least 40. The optimal degree of polymerization may vary depending upon the application for the polymer. For some applications, the best degree of polymerization may be at least 50, 100 or even 150.

When the polymer is a rigid rod polybenzoxazole or polybenzothiazole, it preferably has an single point intrinsic viscosity (as measured in methanesulfonic acid at 25°C) of at least 5 dℓ/g, more preferably at least 10 dL/g and most preferably at least 15 dℓ/g. The single point intrinsic viscosity may go as high as 60 dℓ/g or more, but it is preferably no more than 50 dℓ/g and more preferably no more than 40 dℓ/g. The optimal intrinsic viscosity may vary depending upon the application for the polymer. For some applications, the best intrinsic viscosity may be at least 20, 25 or even 30 dℓ/g.

The dope resulting from polymerization preferably has a uniform spinnable viscosity. The viscosity is preferably within 10 percent of the selected value, more preferably within 5 percent and most preferably within 1 percent.

The dope can be spun to form fibers or extruded to form films according to known processes, such as the processes described in The Materials Science and Engineering of Rigid Rod Polymers, 245-297 (Materials Research Society 1989). The fibers are useful in fiber-based composites and the films are useful in laminates.

The processes of the present invention have several advantages over prior art processes in synthesizing polybenzazole polymers on a large scale. The time consuming mixing, dehydrohalogenation and oligomerization steps can be standardized and run in batch fashion when desired, and then the oligomerized reaction mixture can be stored until needed. When needed, it can be advanced to final molecular weight and in final product form in a relatively short amount of time. Minor variations in monomer or solvent between batches can be easily corrected later in the advancement stage to provide uniform polymer and/or dope. Likewise, different products having different molecular weight and/or viscosity for different applications can be run from the same standard oligomerization batch simply by adjusting the feed of monomer or chain terminator into the advancement reactor. All of the advantages can be realized without the high danger of monomer degradation that exists in devolatilized but unreacted solutions.

The following examples are given to illustrate the invention and should not be interpreted as limiting it in any way. Unless stated otherwise, all parts and percentages are given by weight.

### Example 1

A standard procedure for mixing, dehydrohalogenation and oligomerization of polybenzazole dopes is established. A 45.4 kg (100 lb). quantity of polyphosphoric acid containing 83.7 weight percent P₂O₅ is added to a 113.6 ℓ (25 gallon) reactor with agitation by a helical dual ribbon impeller. The following dry materials are added at about 60°C under nitrogen atmosphere: 8.63 kg (19.01 lbs.) of diaminoresorcinol bis(hydrogen chloride); 6.73 kg (14.822 lbs.) of terephthalic acid; and 10 kg (21.988 lbs.) of P₂O₅. Mixing is continued for 1 hour at 60°C and for about 6 hours at about 120°C. Hydrogen halide gas evolved is drawn off and recovered. The reaction temperature is raised to 140, until a viscosity of about 300 poise is reached. The resulting solution is pumped into a tank and stored under nitrogen atmosphere at about 120°C.

The reaction mixture is pumped through a twin screw extruder having about a 35:1 length to diameter ratio and an internal diameter of about 30 mm. The temperature is between 190°C and 210°C. The residence time is about 6 minutes. The flow through the extruder is about 4.54 kg (10 lb.) of dope per hour. The extruder has a syringe pump that can introduce a measured flow of liquid into the extruder. A solution of polyphosphoric acid and o-aminophenol is introduced as shown in Table 1. The dope leaving the extruder passes through a series of four static mixing elements. The effect of the chain terminator on the dope is monitored by monitoring the pressure drop across the mixers. The resulting polymer is recovered by precipitation in water. Its single point intrinsic viscosity is measured in methanesulfonic acid at 30°C and a concentration of 0.05 g/dℓ. The single point intrinsic viscosity is shown in Table 1. It relates in a linear manner to the pressure drop across the mixers.

**TABLE 1**

| Sample | terminator concentration (%) | terminator solution (cm³/hour) | inherent viscosity (dℓ/g) |
|---|---|---|---|
| 1 | 1 | 52.5 | 33.4 |
| 2 | 1 | 105 | 31.5 |
| 3 | 10 | 10.5 | 32.9 |
| 4 | 10 | 21 | 29.9 |
| 5 | 10 | 31.5 | 26.7 |
| 6 | - | 0 | 42.3 |

### Example 2

The process of Example 1 is repeated using an excess of 4,6-diaminoresorcinol and no terminator. The resulting polymer has an intrinsic viscosity of less than 25 dℓ/g. The syringe pump is used to add a mixture of 10 weight percent terephthalic acid and polyphosphoric acid at the rate indicated in Table 2. The pressure drop across the static mixers is measured, and an estimated single point intrinsic viscosity is calculated using the previously calculated relationship.

**TABLE 2**

| Sample | chain extender solution feed rate (g/hr) | Pressure Drop (psi) kPa | estimated inherent viscosity (dℓ/g) |
|---|---|---|---|
| 7 | 0 | 627.42 (91) | <25 |
| 8 | 0.59 | 896.32 (130) | 28 |
| 9 | 0.89 | 1103.16 (160) | 31 |
| 10 | 1.19 | 1385.85 (201) | 34 |
| 11 | 1.48 | 1413.43 (205) | 35 |
| 12 | 1.78 | 1261.74 (183) | 33 |
| 13 | 2.37 | 1137.64 (165) | 31 |
| 14 | 2.97 | 1054.90 (153) | 30 |
| 15 | 3.56 | 917.00 (133) | 28 |

### Example 3

A mixture containing 250 g of 4,6-diaminoresorcinol bis(hydrogen chloride), 133.6 g of micronized terephthalic acid, 1267 g of 82.5 percent polyphosphoric acid and 508 g of P₂O₅ is agitated under nitrogen atmosphere using a helical dual ribbon impeller at 120°C for 6 days, using a nitrogen purge with the outflow leading to a hydrochloric acid scrubbing device. A 227 g quantity of the mixture is withdrawn. It is mixed with 5.6 g of terephthalic acid and heated under nitrogen atmosphere with agitation for 8 hours at 210°C. The resulting cis-PBO polymer has an single point intrinsic viscosity of about 27 dℓ/g in methanesulfonic acid at 25°C and a concentration of 0.05 g/dℓ.

### Example 4

A mixture containing 200 g of 4,6-diaminoresorcinol bis(hydrogen chloride), 116.85 g of micronized terephthalic acid, 947 g of 82.5 percent polyphosphoric acid, 6.3 g of tin (II) chloride dihydrate and 140 g of P₂O₅ is agitated under 1.33·10² Pa (1 mmHg) pressure using a helical dual ribbon impeller at 120°C for 23 hours and at 150 for 3 hours, using a nitrogen purge with the outflow leading to a hydrochloric acid scrubbing device. Agitation is continued at 150°C for 62 hours under 1 atmosphere nitrogen pressure. A 197 g quantity of P₂O₅ and 38.95 g of terephthalic acid are added at 120. The mixture is heated under nitrogen atmosphere at 210°C in a piston--agitated reactor until it is completed. The resulting cis-PBO polymer has an single point intrinsic viscosity of about 31 dℓ/g in methanesulfonic acid at 25°C and a concentration of 0.05 g/dℓ.

## Claims

1. A process wherein a selected amount of AA-PBZ monomer reacts with a selected amount of BB-PBZ monomer in a dehydrating solvent acid to synthesize an AA/BB-polybenzazole polymer, characterized in that the process comprises the steps of:
(1) reacting the monomers to form a reaction mixture containing polybenzazole oligomer;
(2) contacting a portion of the reaction mixture resulting from step (1) with a selected amount of chain extender and/or chain terminator in a continuous reactor with a residence time of no more than one hour under conditions such that a dope containing higher molecular weight polybenzazole polymers is formed;
(3) measuring a property of the dope and/or polymer resulting from step (2); and
(4) adjusting the selected amount of chain extender and/or chain terminator added to the remaining portions of the reaction mixture in step (2) to obtain a dope and/or polymer in which the measured property meets a selected value.

2. A process as described in claim 1, whereby
(1) a mixture containing AA-PBZ monomer and BB-PBZ monomer is reacted, at a temperature of at least 60°C with agitation in a batch reactor to form a reaction mixture containing polybenzazole oligomers; and
(2) the reaction mixture of step (1) is passed through a single-screw or multiple screw extruder at a temperature of at least 150°C under conditions such that a dope containing a polybenzazole polymer is formed.

3. A process as described in any one of the preceeding claims, wherein the reaction in step (1) contains between 0.75 and 0.99 moles of AA-PBZ monomer per mole of BB-PBZ monomer, and an AA-PBZ monomer is added in step (2) as a chain extender.

4. A process as described in any one of the preceding claims wherein neither the AA-PBZ monomer nor the BB-PBZ monomer is in more than a 4 percent molar excess in step (1) of the process.

5. A process as described in any one of the preceding claims wherein the residence time of the solution in the continuous reactor of step (2) is not more than 20 minutes.

6. A process as described in any one of the preceding claims wherein the continuous reactor of step (2) is a single or multiple screw extruder.

7. A process as described in any one of the preceding claims wherein a chain terminator is added in step (2) in a quantity equal to no more than 5 mole percent of the monomers used in the reaction, and the chain terminator that is any one of:
(a) an o-aminophenol,
(b) an o-aminobenzenethiol,
(c) an o-diaminobenzene,
(d) a benzoic acid,
(e) a benzoyl halide, or
(f) an alkyl benzoate ester.

8. A process as described in any one of the preceding claims wherein the property measured is step (3) is any one of:
(a) dope viscosity; or
(b) polymer molecular weight.

9. A process as described in any one of the preceding claims wherein the monomers are of a type suitable to produce a polybenzoxazole or polybenzothiazole polymer.

10. A process as described in any one of the preceding claims wherein the AA-PBZ monomers are any one of:
(a) terephthalic acid,
(b) terephthaloyl halide,
(c) dialkyl terephthalate ester,
(d) bis(4-benzoic acid),
(e) bis(4-benzoyl halide), or
(f) bis(4-alkylbenzoate).

11. A process as described in any one of the preceding claims wherein the BB-monomer is any one of:
(a) 4,6-diaminoresorcinol or a salt thereof,
(b) 2,5-diaminohydroquinone or a salt thereof; or
(c) 2,5-diamino-1,4-dithiobenzene or a salt thereof.

12. A process as described in any one of the preceding claims wherein the reaction occurs in a solvent containing polyphosphoric acid.

13. A process as described in any one of the preceding claims wherein the oligomers are formed at a temperature between 60°C and 190°C.

14. A process as described in any one of the preceding claims wherein the oligomers are reacted to form polybenzazole polymers at a temperature between 175°C and 230°C.

15. A process as described in any one of the preceding claims wherein the oligomers contain between 5 and 75 repeating units.

## Patentansprüche

1. Verfahren, bei dem eine ausgewählte Menge eines AA-PBZ Monomeren mit einer ausgewählten Menge eines BB-PBZ Monomeren in einer dehydratisierenden Lösungsmittelsäure reagiert, um ein AA/BB-Polybenzazolpolymer zu synthetisieren,
**dadurch gekennzeichnet**,
daß das Verfahren die Schritte umfaßt:
(1) Umsetzen der Monomeren, um eine Reaktionsmischung zu bilden, die Polybenzazololigomere enthält,
(2) Inkontaktbringen eines Teils der Reaktionsmischung, die aus dem Schritt (1) resultiert, mit einer ausgewählten Menge eines Kettenverlängerers und/oder eines Kettenabbruchsmittels in einem kontinuierlichen Reaktor mit einer Verweilzeit von nicht mehr als einer Stunde unter Bedingungen, so daß eine Spinnlösung, die Polybenzazolpolymere mit einem höheren Molekulargewicht enthält, ausgebildet wird,
(3) Messen einer Eigenschaft der Spinnlösung und/oder des Polymers, das aus der Stufe (2) resultiert, und
(4) Einstellen der ausgewählten Menge des Kettenverlängerers und/oder Kettenabbruchsmittels, das zu dem verbleibenden Anteil der Reaktionsmischung in Stufe (2) zugesetzt wird, um eine Spinnlösung und/oder ein Polymer zu erhalten, bei dem die gemessene Eigenschaft einen ausgewählten Wert erfüllt.

2. Verfahren, wie in Anspruch 1 beschrieben, wobei
(1) eine Mischung, die AA-PBZ Monomer und BB-PBZ Monomer enthält, bei einer Temperatur von wenigstens 60°C unter Rühren in einem Satzreaktor umgesetzt wird, um eine Reaktionsmischung auszubilden, die Polybenzazololigomere enthält, und
(2) die Reaktionsmischung der Stufe (1) durch einen Einschnecken- oder Mehrschneckenextruder bei einer Temperatur von wenigstens 150°C unter Bedingungen geführt wird, so daß eine Spinnlösung, die ein Polybenzazolpolymer enthält, ausgebildet wird.

3. Verfahren, wie in einem der vorstehenden Ansprüche beschrieben, wobei in Stufe (1) zwischen 0,75 und 0,99 Mole AA-PBZ Monomer pro Mol BB-PBZ Monomer umgesetzt werden und ein AA-PBZ Monomer in Stufe (2) als Kettenverlängerer zugesetzt wird.

4. Verfahren, wie in einem der vorstehenden Ansprüche beschrieben, wobei weder das AA-PBZ Monomer, noch das BB-PBZ Monomer in einem Überschuß von mehr als 4 Mol-% in Stufe (1) des Verfahrens vorhanden ist.

5. Verfahren, wie in einem der vorstehenden Ansprüche beschrieben, wobei die Verweilzeit der Lösung in dem kontinuierlichen Reaktor der Stufe (2) nicht mehr als 20 Minuten beträgt.

6. Verfahren, wie in einem der vorstehenden Ansprüche beschrieben, wobei der kontinuierliche Reaktor in Stufe (2) ein Einschnecken- oder Mehrschneckenextruder ist.

7. Verfahren, wie in einem der vorstehenden Ansprüche beschrieben, wobei ein Kettenabbruchsmittel in Stufe (2) in einer Menge zugesetzt wird, die nicht mehr als 5 Mol-% der Monomere, die bei der Reaktion verwendet werden, entspricht, und das Kettenabbruchsmittel irgendeines der folgenden ist:
(a) ein ortho-Aminophenol,
(b) ein ortho-Aminobenzolthiol,
(c) ein ortho-Diaminobenzol,
(d) eine Benzoesäure,
(e) ein Benzoylhalogenid oder
(f) ein Alkylbenzoatester.

8. Verfahren, wie in einem der vorstehenden Ansprüche beschrieben, wobei die in Stufe (3) gemessene Eigenschaft eine der folgenden ist:
(a) Viskosität der Spinnlösung oder
(b) Molekulargewicht des Polymeren.

9. Verfahren, wie in einem der vorstehenden Ansprüche beschrieben, wobei die Monomeren von einem geeigneten Typ sind, um ein Polybenzoxazol oder ein Polybenzothiazolpolymer auszubilden.

10. Verfahren, wie in einem der vorstehenden Ansprüche beschrieben, wobei die AA-PBZ Monomeren eine der folgenden sind:
(a) Terephthalsäure,
(b) Terephtaloylhalogenid,
(c) Dialkylterephthalatester,
(d) Bis(4-benzoesäure),
(e) Bis(4-benzoylhalogenid) oder
(f) Bis(4-alkylbenzoat).

11. Verfahren, wie in einem der vorstehenden Ansprüche beschrieben, wobei das BB Monomer eines der folgenden ist:
(a) 4,6-Diaminoresorcin oder ein Salz davon,
(b) 2,5-Diaminohydrochinon oder ein Salz davon oder
(c) 2,5-Diamino-1,4-dithiobenzol oder ein Salz davon.

12. Verfahren, wie in einem der vorstehenden Ansprüche beschrieben, wobei die Reaktion in einem Lösungsmittel, das Polyphosphorsäure enthält, stattfindet.

13. Verfahren, wie in einem der vorstehenden Ansprüche beschrieben, wobei die Oligomeren bei einer Temperatur zwischen 60°C und 190°C ausgebildet werden.

14. Verfahren, wie in einem der vorstehenden Ansprüche beschrieben, wobei die Oligomeren bei einer Temperatur zwischen 175°C und 230°C umgesetzt werden, um ein Polybenzazolpolymer auszubilden.

15. Verfahren, wie in einem der vorstehenden Ansprüche beschrieben, wobei die Oligomeren zwischen 5 und 75 sich wiederholende Einheiten enthalten.

## Revendications

1. Procédé dans lequel on fait réagir une quantité choisie de monomère AA-PBZ avec une quantité choisie de monomère BB-PBZ dans un solvant déshydratant de type acide pour synthétiser un polybenzazole AA/BB polymère, caractérisé en ce que le procédé comprend les étapes qui consistent à :
(1) faire réagir les monomères pour former un mélange réactionnel contenant un polybenzazole oligomère ;
(2) mettre une partie du mélange réactionnel résultant de l'étape (1) en contact avec une quantité choisie d'un agent d'allongement de chaîne et/ou d'un agent de terminaison de chaîne dans un réacteur continu pendant un temps de séjour ne dépassant pas une heure, dans des conditions telles qu'une bouillie contenant des polybenzazoles polymères de masse moléculaire supérieure se forme ;
(3) déterminer une propriété de la bouillie et/ou du polymère résultant de l'étape (2) ; et
(4) régler la quantité choisie de l'agent d'allongement de chaîne et/ou de l'agent de terminaison de chaîne ajouté aux parties restantes du mélange réactionnel de l'étape (2) pour obtenir une bouillie et/ou un polymère dans lequel la propriété déterminée atteint une valeur choisie.

2. Procédé conforme à la revendication 1, dans lequel
(1) on fait réagir un mélange contenant un monomère AA-PBZ et un monomère BB-PBZ à une température d'au moins 60° C sous agitation dans un réacteur fonctionnant en mode discontinu pour former un mélange réactionnel contenant des polybenzazoles oligomères ; et
(2) on fait passer le mélange réactionnel de l'étape (1) à travers une extrudeuse à vis unique ou à vis multiples à une température d'au moins 150° C dans des conditions telles qu'une bouillie contenant un polybenzazole polymère se forme.

3. Procédé conforme à l'une quelconque des précédentes revendications, dans lequel la réaction de l'étape (1) contient de 0,75 à 0,99 mole de monomère AA-PBZ par mole de monomère BB-PBZ, et on ajoute un monomère AA-PBZ dans l'étape (2) en tant qu'agent d'allongement de chaîne.

4. Procédé conforme à l'une quelconque des précédentes revendications, dans lequel ni le monomère AA-PBZ, ni le monomère BB-PBZ ne sont présents en une proportion supérieure à un excès de 4 % en moles dans l'étape (1) du procédé.

5. Procédé conforme à l'une quelconque des précédentes revendications, dans lequel le temps de séjour de la solution dans le réacteur fonctionnant en mode continu de l'étape (2) ne dépasse pas 20 minutes.

6. Procédé conforme à l'une quelconque des précédentes revendications, dans lequel le réacteur fonctionnant en mode continu de l'étape (2) est une extrudeuse à vis unique ou à vis multiples.

7. Procédé conforme à l'une quelconque des précédentes revendications, dans lequel on ajoute un agent de terminaison de chaîne dans l'étape (2) en une quantité égale à 5 % en moles au plus de monomères utilisés dans la réaction, et l'agent de terminaison de chaîne est l'un quelconque des :
(a) o-aminophénol,
(b) o-aminobenzènethiol,
(c) o-diaminobenzène,
(d) acide benzoïque,
(e) halogénure de benzoyle, ou
(f) ester de type benzoate d'alkyle.

8. Procédé conforme à l'une quelconque des précédentes revendications, dans lequel la propriété déterminée dans l'étape (3) est l'une quelconque des :
(a) viscosité de la bouillie; ou
(b) masse moléculaire du polymère.

9. Procédé conforme à l'une quelconque des précédentes revendications, dans lequel les monomères sont appropriés pour produire un polymère de type polybenzoxazole ou polybenzothiazole.

10. Procédé conforme à l'une quelconque des précédentes revendications, dans lequel les monomères AA-PBZ sont l'un quelconque des :
(a) acide téréphtalique,
(b) halogénure de téréphtaloyle,
(c) ester de type téréphtalate de dialkyle,
(d) bis(acide 4-benzoïque),
(e) bis(halogénure de 4-benzoyle) ou
(f) bis(4-benzoate d'alkyle).

11. Procédé conforme à l'une quelconque des précédentes revendications, dans lequel le monomère BB est l'un quelconque des :
(a) 4,6-diaminorésorcinol ou un de ses sels,
(b) 2,5-diaminohydroquinone ou un de ses sels, ou
(c) 2,5-diamino-1,4-dithiobenzène ou un de ses sels.

12. Procédé conforme à l'une quelconque des précédentes revendications, dans lequel la réaction se produit dans un solvant contenant de l'acide polyphosphorique.

13. Procédé conforme à l'une quelconque des précédentes revendications, dans lequel les oligomères se forment à une température comprise entre 60 et 190° C.

14. Procédé conforme à l'une quelconque des précédentes revendications, dans lequel on fait réagir les oligomères pour former des polybenzazoles polymères à une température comprise entre 175 et 230° C.

15. Procédé conforme à l'une quelconque des précédentes revendications, dans lequel les oligomères comportent de 5 à 75 motifs répétitifs.
